# EUROPÄISCHE PATENTSCHRIFT

(11) **EP 0 648 982 B1**
(45) Veröffentlichungstag und Bekanntmachung des Hinweises auf die Patenterteilung: **25.02.1998**
(21) Anmeldenummer: 93119496.3
(22) Anmeldetag: 03.12.1993
(51) Int. Cl.: F24D 12/02

(54) **Verfahren und Anlage zur Rückgewinnung von Wärme aus den Abgasen von Feuerungsanlagen**
Method and installation for the heat recuperation from combustion gases
Procédé et appareil pour la récupération de chaleur des fumées d'un foyer

(30) Priorität: 13.10.1993 DE 4334849
(43) Veröffentlichungstag der Anmeldung: 19.04.1995
(73) Patentinhaber: Höfer, Hendrik, D-53604 Bad Honnef (DE)
(72) Erfinder: Höfer, Hendrik, D-53604 Bad Honnef (DE)
(74) Vertreter: Müller-Gerbes, Margot, Dipl.-Ing.

(56) Entgegenhaltungen:
- EP-A- 0 456 582
- EP-A- 0 632 238
- DE-A- 3 225 926
- DE-A- 3 344 089
- DE-C- 3 911 276
- DE-C- 4 112 522
- FR-A- 2 293 674
- NL-A- 7 612 508

## Beschreibung

Die Erfindung befaßt sich mit einem Verfahren zur Rückgewinnung von Wärme aus den abgasen von Feuerungsanlagen durch Abkühlen der heißen Abgase beim Durchleiten durch einen Abgaswärmetauscher bis unter den Wassertaupunkt der Abgase und nachfolgendem Wiedererwärmen der Abgase über ihren Wassertaupunkt für den Abzug durch einen Kamin, bei dem Heizmedium in einer Feuerungsanlage erwärmt und in einem Kreislauf über mindestens einen Wärmeverbraucher, wie Heizung, zum Entzug von Wärme geführt und das abgekühlte im Heizungsrücklauf befindliche Heizmedium dem mit den heißen Abgasen beaufschlagten Abgaswärmetauscher zugeführt wird und unter Abkühlen der heißen Abgase das Heizmedium sich erwärmt und zur Feuerungsanlage zurückgeführt wird und die bis unter den Wassertaupunkt abgekühlten Abgase nach Abzug des Kondensats an den Außenflächen des Abgaswärmetauschers nach oben geführt werden und hierbei durch Kontakt mit den heißen Flächen des Abgaswärmetauschers sich auf eine für den Abzug durch den Kamin ausreichende Temperatur erwärmen.

Die Erfindung betrifft des weitere eine Anlage zur Rückgewinnung von Wärme nach dem Verfahren, enthaltend eine Feuerungsanlage, einen Abgaswärmetauscher für das Durchleiten von oben nach unten der von der Feuerungsanlage kommenden heißen Abgase unter Abkühlung derselben mit einem Abzugskanal entlang der Außenflächen des Abgaswärmetauschers von unten nach oben für das Ableiten der abgekühlten Abgase in den Kamin unter gleichzeitiger Erwärmung derselben durch Entlangstreichen an den Außenflächen des Abgaswärmetauschers und mit mindestens einem Wärmeverbraucher für das in der Feuerungsanlage erwärmte und nach Durchlaufen der Wärmeverbraucher im Heizungsrücklauf zurückgeführte abgekühlte Heizmedium.

Wärmetauscher, mehrstufig übereinander oder hintereinander angeordnet und dabei jeweils einem jeweils vorhandenen Heizkreis zugeordnet, werden bisher benutzt, um die Abgasverluste von Wäürmeerzeugern zu reduzieren. Der Wirkungsgrad ist dabei abhängig, wie die entzogenen Wärmeinhalte die Abgase abkühlen und in die Kondensation führen. Problematisch sind hierbei insbesondere die Werkstoffbeanspruchung der Wärmetauscher, die Abgasführung durch und über die Wärmetauscher und die Abgasbehandlung unmittelbar vor Kamineintritt sowie das Kaminverhalten.

Ein gattungsgemäßes Verfahren und Anlage sind beispielsweise aus der DE 39 11 276 C1 bekannt. Zur Abgasnachwärmung wird hierbei der Abgasstrom geteilt und in zwei Abzugskanälen um das Gehäuse des Abgaswärmetauschers zur Aufwärmung durch Kontakt mit den heißen Abgaswärmetauschergeflächen geführt. Eine Regelung des Grades der Aufwärmung ist nur beschränkt auf einem Teilstrom des Abgases weit entfernt von dem Eintritt in den Kamin vorgesehen, so daß eine stets ausreichende Aufwärmung der abgekühlten Abgase für einen Kaminabzug nicht sichergestellt werden kann. Der Abgaswärmetauscher selbst wird von verschiedenen Kühlmedien beaufschlagt, so daß bei welchsenden Wärmeinhalten der Kühlmedien und des Abgases eine optimale Ausnutzung kaum erzielbar ist, und auch die Abkühlung des Abgases bis unter den Wassertaupunkt nicht stets gewährleistet ist.

Für die Auswahl des Werkstoffes für die Wärmetauscher sind die auftretenden Korrosionsbedingungen in den verschiedenen Bereichen der Wärmetauscher, insbesondere bei allen mit Abgas berührten Flächen. Dies ist insbesondere für den Kondensationsbereich der Anlage von Bedeutung. Art und Zusammensetzung der anfallenden Schadstoffe liegen bei Abgasen je nach Art der eingesetzten Primärenergie und abhängig von Feuerung und Verbrennung in den verschiedensten Zusammensetzungen vor. Die Abgase enthalten in der Regel aggressive Bestandteile (Säuren, Salze), die bei der Abkühlung der Abgase auf Grund der physikalischen Gesetzmäßigkeit wirksam werden. Es ergibt sich ein stark saurer Zustand der sich bildenden Kondensate, wie Schwefelsäure, Salzsäure, Flußsäure und diverse Salze. Die Kondensationstemperatur der sich aus dem im Abgas enthaltenen Schwefeldioxyd bildenden Schwefelsäure - Taupunkt, Säuretaupunkt - liegt wesentlich über der Kondensationstemperatur des in dem Abgas enthaltenen Wasserdampfes. Diese sauren Betriebsbedingungen ergeben sich immer bei der Abkühlung von aggressiven Abgasen.

Aus den vorgenannten Tatsachen ergibt sich die Forderung nach korrosionsfesten Wärmetauschern. Über Werkstoffe, geeignet zum Einsatz in Wärmetauschern bei korrosiver Beaufschlagung, liegen umfangreiche Betriebserfahrungen vor. Weder Metall- noch Kunststoffbeschichtungen konnten befriedigende Standzeiten erreichen. Auch besteht das Problem der Spannungsrisse bei Beschichtungen. Als geeignete Werkstoffe erwiesen sich unbeschichtete Rohre aus Sonderstählen, speziellen Metallegierungen, Kunststoffen wie Polyvinylidenfluorid und Polytetrafluorethylen sowie imprägnierter Elektrographit.

Neben dem Korrosionsschutz sind weitere Kriterien beim Einsatz von Wärmerückgewinnungsanlagen und deren Aufbau zu beachten, wie Staubgehalt und Temperatur der Rauchgase im Hinblick auf Abrasionsbeanspruchung der Werkstoffe, Temperatur und Druck der Wärmeträgermedien bei Kreislaufverbundsystemen, mögliche Reinigungsmethoden der verschmutzten Wärmetauscherflächen, erhöhte Wärmeleitfähigkeit und Temperaturwechselfestigkeit der Rohrwerkstoffe, Langzeiterfahrungen bei den bekannten Beanspruchungen und nicht zuletzt möglichst geringe Investitionskosten.

Bei der Abgasführung in Wärmerückgewinnungsanlagen ist zu beachten, daß durch den Wärmetauscher grundsätzlich der natürliche Kaminzug für die Abführung des Abgases unterbrochen wird. Durch den Wärmetauscher werden geräteeigene Widerstände aufgebaut, die das Zugverhalten des Kamins negativ beeinträchtigen. Zur Überbrückung dieser Widerstände werden bisher Ventilatoren mit entsprechend hoher Leistung eingesetzt, um die Abgasströmung wieder in Gang zu bringen. Eine weitere bekannte Möglichkeit bei bekannten Wärmerückgewinnungsanlagen besteht darin, daß der Brenner auf die Gesamtwiderstände der Wärmerückgewinnungsanlage eingestellt wird. Im ersten Fall sind erhöhte Investitionskosten sowie auch erhöhte Betriebskosten durch die Ventilatoren die Folge. Die zweite Lösung verursacht ein zusätzliches Problem, da bei Ausfall der Wärmerückgewinnung und bei Betrieb der Heizung im Bypass bei verstelltem Brenner das Luftmengenverhältnis wesentlich überschritten und eine Flammbildung wegen der zu hohen Luftzahl behindert, wenn nicht sogar unmöglich wird. Werden die geräteeigenen Widerstände mit dem Brenner überwunden, so ist immer die Einrichtung bzw. Änderung des vorhandenen Kamines in einen Überdruckkamin notwendig.

Der Erfindung liegt die Aufgabe zugrunde, die Abgaswärmerückgewinnung unabhängig von weiteren Niedertemperaturabnehmern zu gestalten, gleichzeitig eine gesicherte ausreichende Wiedererwärmung der bis unter den Taupunkt abgekühlten heißen Abgase für einen ausreichenden Kaminabzug zur Vermeidung von Kaminversottung zu gewährleisten und das im Heizungsrücklauf zur Feuerungsanlage befindende Heizmedium möglichst optimal auszukühlen.

Diese Aufgabe wird erfindungsgemäß mit einem Verfahren gemäß Patentanspruch 1 und des weiteren mit einer Anlage gemäß den Merkmalen des Anspruches 9 gelöst.

Erfindungsgemäß wird ein einstufiger Abgaswärmetauscher eingesetzt, d.h. die heißen Abgase werden in einem Wärmetauscher, der nur eine Stufe für den Anschluß an nur einen Austauschkreis im System des Heizungsrücklaufes des Heizmediums aufweist, abgekühlt. Insbesondere werden die Abgase unabhängig, d.h. separat von der Abkühlung und der Wärmerückgewinnung des sich im Heizungsrücklauf befindenden Heizmediums abgekühlt. Vor Anschluß, d.h. Eintritt in den einstufigen Abgaswärmetauscher wird das sich im Heizungsrücklauf befindende Heizmedium extern in bezug auf den Abgaswärmetauscher über andere Wärmetauschanlagen, die sogenannte Niedertemperaturheizkreise bilden, geführt. Diese Niedertemperaturheizkreise besitzen in Durchlaufrichtung des Heizmediums im Verhältnis zueinander nacheinander jeweils ein niedrigeres Temperaturniveau. Diese Niedertemperaturheizkreise arbeiten mittels im Gegenstrom oder Kreuzstrom funktionierender Wärmetauschaggregate, wobei die Temperatur des Heizmediums, in der Regel Wasser, des Heizungsrücklaufes durch Wärmetausch mit den ein niedrigeres Temperaturniveau als der Heizungsrücklauf besitzenden folgenden Niedertemperaturheizkreisen der Niedertemperaturabnehmer ausgekühlt wird. Der Heizkreis des Niedertemperaturabnehmers mit der niedrigsten Temperatur bestimmt die maximale Auskühlung des Heizmediums im Heizungsrücklauf. Das so auf die tiefstmögliche Temperatur ausgekühlte Heizmedium im Heizungsrücklauf, das stets unter die den Wassertaupunkt der heißen Abgase bildende Temperatur abgekühlt sein sollte, wird nun in den Abgaswärmetauscher geleitet und von den heißen Abgasen aufgewärmt, bevor es in die Feuerungsanlage zurückgeleitet wird, um wiederum auf Soll-Temperatur, nämlich Heiztemperatur, erwärmt zu werden und dann als Heizungsvorlauf wiederum dem Wärmeverbraucher, beispielsweise Heizung, zugeführt wird. Den Wärmeverbraucher verläßt das Heizmedium, um dann im Heizungsrücklauf weiter abgekühlt und zum Schluß wiedererwärmt zu werden. Die Eingangstemperatur des in den Abgaswärmetauscher strömenden abgekühlten Heizmediums aus dem Heizungsrücklauf liegt weit unter 47°C bzw. 57°C und damit weit unter dem Wassertaupunkt der Abgase aus öl- bzw. gasbefeuerten Feuerungsanlagen. Durch den im Abgaswärmetauscher eintretenden Wärmetausch der heißen Abgase mit dem ausgekühlten rücklaufenden Heizmedium weit unter den Taupunkt der Abgase werden diese in massive Kondensation geführt. Der Wirkungsgrad ist dabei abhängig von dem Temperaturniveau des in den Abgaswärmetauscher strömenden rücklaufenden kalten Heizmediums, das die Kondensation durch Entziehen der Wärmeinhalte des Abgases verursacht.

Vorteilhafte Ausgestaltungen des erfindungsgemäßen Verfahrens sind den kennzeichnenden Merkmalen der Ansprüche 2 bis 8 und vorteilhafte Weiterbildungen der erfindungsgemäßen Anlage sind den kennzeichnenden Merkmalen der Ansprüche 10 bis 18 entnehmbar.

Die Aufgabe der ausreichenden gesicherten Wiedererwärmung der abgekühlten Abgase für einen ausreichenden Kaminabzug wird dadurch gelöst, daß die abgekühlten Abgase durch den am Abgaswärmetauscher ausgebildeten Abzugskanal in dem ebenfalls am Abgaswärmetauscher oberhalb angrenzend ausgebildeten Stauraum geleitet werden, auf dem Weg dorthin in dem oberen Bereich des Abgaswärmetauschers durch Kontaktwärme und im Stauraum ebenfalls durch Kontaktwärme aufgewärmt werden und der vor Kamineintritt nach Austritt aus dem Stauraum angeordnete stufenlos geregelte Ventilator (Lüfter) die geräteeigenen Widerstände überwindet. Die Nachwärmung verlagert den Wassertaupunkt der ausgekühlten Abgase zu dem Taupunkt nach Wiedererwärmung so, daß im Kamin keine Nachkondensation entstehen kann. Der stufenlos geregelte Ventilator verursacht immer einen Unterdruck des Abgases vor Kamineintritt.

Die Erfindung läßt sich insbesondere mit Abgaswärmetauschern mit vertikal angeordneten und mittels horizontaler Trennwände teilweise unterteilter Gaskanäle realisieren, die ein mäandrierendes Durchströmen der heißen Abgase durch die Gaskanäle bewirken. Der Abaswärmetauscher enthält des weiteren einen sich oberhalb des Abgaswärmetauschers an die Gaskanäle anschließenden Verteilerraum mit Zuleitung für das Abgas und einem sich unterhalb des Abgaswärmetauschers an die Gaskanäle anschließenden Wenderaum mit Kondensatablauf und eine umlaufende Verkleidung des Abgaswärmetauschers aus nichtkorrodierendem Material. Die Verkleidung des Abgaswärmetauschers bildet zudem einseitig einen Abzugskanal mit Kaminanschluß für das abgekühlte Abgas, sowie einen Stauraum mit gegenüber dem Abzugskanal vergrößertem Querschnitt zur Beeinflussung der Verweilzeit der Abgase zweck Wiedererwärmung über eine im Ausgang zum Verlassen des Stauraumes angeordnete Jalousieklappe vor Kamineintritt.

Die Erfindung läßt sich besonders vorteilhaft in Verbindung mit Wärmetauschern aus imprägniertem Elektrographit als Abgaswärmetauscher realisieren. Hierbei kann der seitlich hochgeführte Abzugskanal für die abgekühlten Abgase direkt an die Außenfläche des Abgaswärmetauschers, d.h. an die Graphitwand, anschließen, wodurch der Wärmeübergang zum Wiederaufwärmen der abgekühlten Abgase durch Kontakt optimiert wird. Elektrographit ist ein keramischer Werkstoff, bei dem es sich um eine kristalline Modifikation des Kohlenstoffs handelt. Er wird aus Kunststoffen, wie Kohlepulver, Bindemitteln und Additiven bei hoher Temperatur zu einer plastischen Masse gemischt, die durch geeignete Formgebungswerkzeuge in die gewünschte Halbzeugform, wie Zylinderrohre, gebracht und anschließend bei Temperaturen von 800°C bis 1300°C geglüht wird. Bei diesem Glühvorgang wird das Bindemittel karbonisiert. Bei dem sich anschließenden Verfahrensschritt, auch Elektrographitierung genannt, wird der Kohlenstoffkörper in einem Graphitierungsofen nochmals bei Temperaturen bis 3000°C geglüht, bei den hohen Temperaturen entsteht aus Kohlenstoff Graphit. Aufgrund kristalliner Ordnungsvorgänge erhält der Werkstoff Graphit, die ihn kennzeichnenden Eigenschaften, wie hervorragende elektrische und thermische Leitfähigkeit sowie die bereits vorhandene ausgezeichnete Korrosionsbeständigkeit des Kohlenstoffes. Da Elektrographit sehr porös ist, werden die im Graphit enthaltenen Poren nachträglich durch Imprägnieren verschlossen, wobei als Füllmaterial Phenolformaldehydharze, Furanharze und Polytetrafluorethylen benutzt wird.

Die erfindungsgemäße Anlage ermöglicht die Nachwärmung der abgekühlten Abgase ohne zusätzlichen Druckaufbau und zusätzliche Mittel durch die Ausbildung einer Seitenwand des Abgaswärmetauschers zu einem Abzugskanal für die Abgase und durch den Stauraum vor Kamineintritt. Insbesondere ist es möglich, auf einfache Weise die Nachwärmung der abgekühlten Abgase zu steuern, und zwar durch Beeinflussung der Verweildauer der Abgase in dem Stauraum. Hierzu wird die Austrittstemperatur am Kaminende über einen Meßfühler festgestellt. Die Temperatur an diesem Meßpunkt darf die Temperatur nach Auskühlung der Abgase vor Nachwärmung nicht unterschreiten. Wird ein Unterschreiten dieser niedrigsten Temperatur des Abgases am Kaminende festgestellt, so wird über eine Differenztemperaturmessung ein Stellmotor die in der Abgaseführung eingebaute Jalousieklappe betätigen. Der Abgasweg wird dabei im Querschnitt verändert, d.h. verringert, um eine längere Verweilzeit des Abgases mit der Folge einer höheren Nachwärmung im Stauraum zu erreichen. Eine Nachkondensation im Kamin ist somit ausgeschlossen, weil die Temperatur der ausgekühlten Abgase vor Wiederaufwärmung immer niedriger ist als die gemessene Austrittstemperatur am Kaminmund. Da eine Nachkondensation ausgeschlossen ist, kann auch eine Kaminversottung nicht eintreten. Der in den Kaminabzug eingebaute Lüfter besitzt einen stufenlos geregelten Antrieb, der von einem Druckwächter am Brennkessel der Feuerungsanlage gesteuert wird. Da der Druckwächter am Brennkessel bei normalen Wärmeerzeugern einen Unterdruck des Abgases bewirkt und überwacht und in Verbindung mit der Abgaswärmerückgewinnung diese Funktion auch für den stufenlos geregelten Motor des Lüfters übernimmt, ist hinter dem Lüfter der geräteeigene Widerstand aufgehoben und am Kamineintritt ist dann für das Abgas ein Unterdruck vorhanden. Wegen der Nachwärmung mit Verhinderung einer Kaminversottung und durch Beibehaltung des Unterdruckes am Kamineintritt des Abgases erübrigt sich jedwede Veränderung vorhandener Kamine bei Einbau der erfindungsgemäßen Wärmerückgewinnungsanlage.

Die Wirkungsweise der erfindungsgemäßen Anlage und Verfahren zur Rückgewinnung der Wärme aus Abgasen von Feuerungsanlagen durch Abkühlung weit unter den Wassertaupunkt und nachfolgendem Wiedererwärmen der Abgase über den Wassertaupunkt beruht darauf, extern zum Abgaswärmetauscher, der nur der Wärmerückgewinnung aus den heißen Abgasen für das sich im Heizungsrücklauf befindende Heizmedium dient, das sich im Heinzungsrücklauf befindende Heizmedium über eine oder mehrere Stufen einer weiteren Wärmetauschanlage auszukühlen. Auf diese Weise wird dem Abgaswärmetauscher nur ein einziges Medium mit möglichst niedriger Temperatur zum Abkühlen der heißen Abgase zur Verfügung gestellt, damit sich die Abgase weit unterhalb ihres Wassertaupunktes auskühlen können. Hierbei wird zusätzlich der Abgaswärmetauscher so ausgebildet, daß zur besseren Wärmeübertragung die heißen Abgase über vertikal angeordnete Gaskanäle mäandrierend geleitet und nach Verlassen der Gaskanäle in der sich anschließenden Sammelwanne für das Kondensat gleichzeitig als Abgaswendekammer ausgebildet umgeleitet werden, um in einem aufwärts sich erstreckenden direkt an dem Abgaswärmetauscheraußenflächen anliegenden Abzugskanal mit Kaminanschluß in diesem geführt zu werden. Dieser Abzugskanal nimmt die ausgekühlten Abgase auf und erwärmt sie bereits beim Entlangstreichen nach oben, wobei zusätzlich in einem Stauraum die Verweilzeit der Abgase für eine ausreichende Nachwärmung mit Hilfe einer den Ausgang des Stauraumes steuerbaren Jalousieklappe beeinflußt werden kann, so daß sich die heißen Abgase in diesem Stauraum über Kontaktwärme zum Abgaswärmetauscher ausreichend nachwärmen können. Die Steuerung der Jalousieklappe erfolgt eine Differenztemperaturmessung, um eine Kaminversottung auszuschließen. Zusätzlich ist noch ein Lüfter vorgesehen, der im Kaminabzug eingebaut ist, um die geräteeigenen Widerstände zu überwinden und den Unterdruck am Kamineintritt des Abgases zu gewährleisten. Insbesondere ist es mit der Erfindung möglich, mit einem einstufigen Wärmetauscher für die heißen Abgase diesem Abgaswärmetauscher ausreichende Wassermengen - abgekühltes Heizmedium im Heizungsrücklauf - auf niedrigstem Temperaturniveau zur Verfügung zu stellen, so daß die Menge des den Abgaswärmetauscher durchströmenden kalten Mediums so gestaltet werden kann, daß der komplette Wärmeinhalt der heißen Abgase auf dieses Medium übertragen werden kann, bis auf die an den Kontaktflächen des Wärmetauschers nach außen abgegebenen Wärmemengen.

Die erfindungsgemäße Anlage und das Verfahren ermöglichen die Vermeidung der Verschmutzung des Abgaswärmetauschers, verursacht durch unzulässige Rußzahlen dadurch, daß ein Teilstrom des kalten Heizmediums aus dem Heizungsrücklauf den zum Abgas befindlichen ersten Kanälen, d.h. dem Eingangsbereich der Gaskanäle, zugeführt wird, so daß sofort zu Beginn der Wärmeübertragung der in den Abgaswärmetauscher einströmenden heißen Abgase aus den Abgasen eine massive Kondensation entsteht, die ein Ablagern von Schmutzteilchen durch ständiges Abwaschen verhindert.

Die erfindungsgemäße Anlage ermöglicht auch ein periodisches Abwaschen des Abgaswärmetauschers durch Einspritzen von Kondensat über die obere Tauscherfläche und damit verbunden ein Abwaschen dieses Bereiches.

Darüber hinaus ist es möglich, das erfindungsgemäße Verfahren und die Anlage für die Produktion von hocherwärmtem Brauchwasser einzusetzen, wobei das dem Abgaswärmetauscher verlassende hocherwärmte Heizmedium des Heizungsrücklaufes, bevor es der Feuerungsanlage wieder zugeführt wird, einen Wärmetauscher für Brauchwasser durchläuft. Die erfindungsgemäße Anlage ermöglicht, das rücklaufende Heizmedium, Wassermenge, im Abgaswärmetauscher so zu dosieren, daß mit hocherwärmtem rücklaufendem Heizmedium mit einer Temperatur von 65°C bis 70°C den Abgaswärmetauscher verläßt, so daß mit diesem hocherwärmten Heizmedium im Heizungsrücklauf warmes Brauchwasser produziert werden kann, wodurch der Legionellenbildung im Brauchwasser entgegengewirkt werden kann. Dieser Wärmetauscher für Brauchwasser kann ebenfalls periodisch eingeschaltet werden.

Auf diese Weise wird das ständige Vorhalten eines separaten Heizkreises auf hohem Temperaturniveau für die Herstellung von Brauchwasser mit der Folge der Energieverschwendung verhindert.

Die Erfindung wird nachfolgend in der Zeichnung beispielhaft erläutert. Es zeigen
- Fig. 1, 2: zwei schematische Darstellungen von Anlagen zur Wärmerückgewinnung aus heißen Abgasen
- Fig. 3: in schematisierter Darstellung einen Querschnitt durch das Wärmerückgewinnungsgerät mit Abgaswärmetauscher für die heißen Abgase.

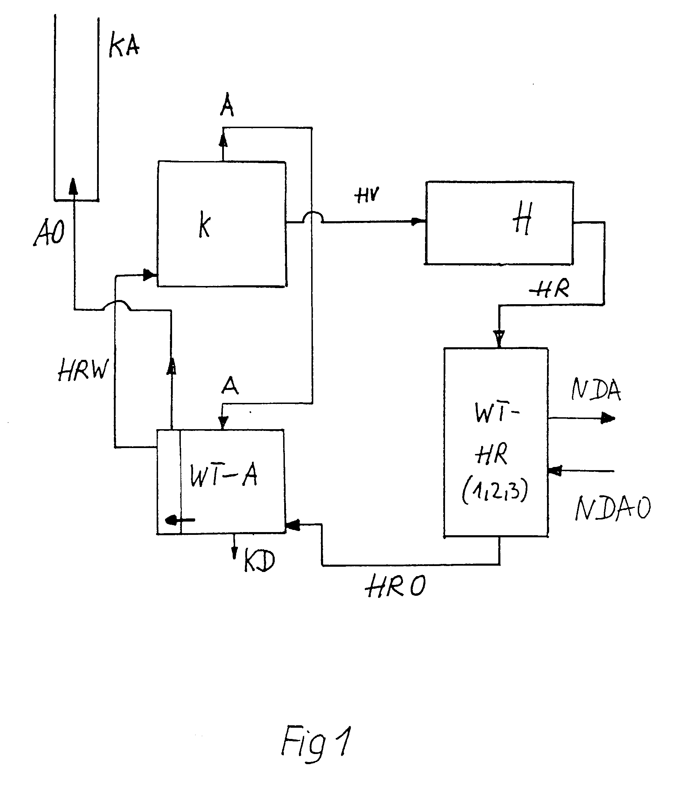

In der Fig. 1 ist das Schema einer Anlage und Verfahren zur Rückgewinnung von Wärme aus den Abgasen von Feuerungsanlagen dargestellt, wobei die Feuerungsanlage mit Brennkessel K dargestellt ist. Das in dem Brennkessel erhitzte Heizmedium, zum Beispiel Wasser, wird im Heizungsvorlauf HV einem Wärmeverbraucher, beispielsweise einem Heizungssystem H, zugeführt. Danach wird das bereits abgekühlte Heizungsmedium im Heizungsrücklauf HR zum Entzug weiterer Wärme, bis das Heizmedium eine unterhalb des Wassertaupunktes der heißen Abgase der Feuerungsanlage liegende Temperatur erreicht, einer ein- oder mehrstufigen Wärmetauschanlage WT-HR für Niederdruckabnehmer NDA zugeführt, wobei ein, zwei oder drei Niederdrucktemperaturabnehmer und entsprechende Niedertemperaturheizkreise vorhanden sein können. Das soweit abgekühlte Heizmedium HRO wird nun einem weiteren Wärmerückgewinnungsgerät, nämlich einem Abgaswärmetauscher WT-A, zugeführt. Der Abgaswärmetauscher WT-A wird von den heißen, die Feuerungsanlage verlassenden Abgasen A zur Wärmerückgewinnung der noch vorhandenen Wärme einschließlich der latenten Wärme zugeführt. Die heißen Abgase werden in dem einstufigen Abgaswärmetauscher bis unterhalb ihres Wassertaupunktes abgekühlt, so daß das Kondensat KD abgeführt werden kann und die soweit abgekühlten Abgase werden dann in einem Seitenkanal des Abgaswärmetauschers zur Nachwärmung zurückgeführt, so daß bis auf eine für den Kaminabzug ausreichende Temperatur wiedererwärmte Abgase AO den Abgaswärmetauscher verlassen und durch den Kamin KA abziehen können. Das im Abgaswärmetauscher wiedererwärmte sich im Heizungsrücklauf befindende Heizmedium HRW wird dann wiederum der Feuerungsanlage, d.h. dem Brennkessel K, zugeführt.

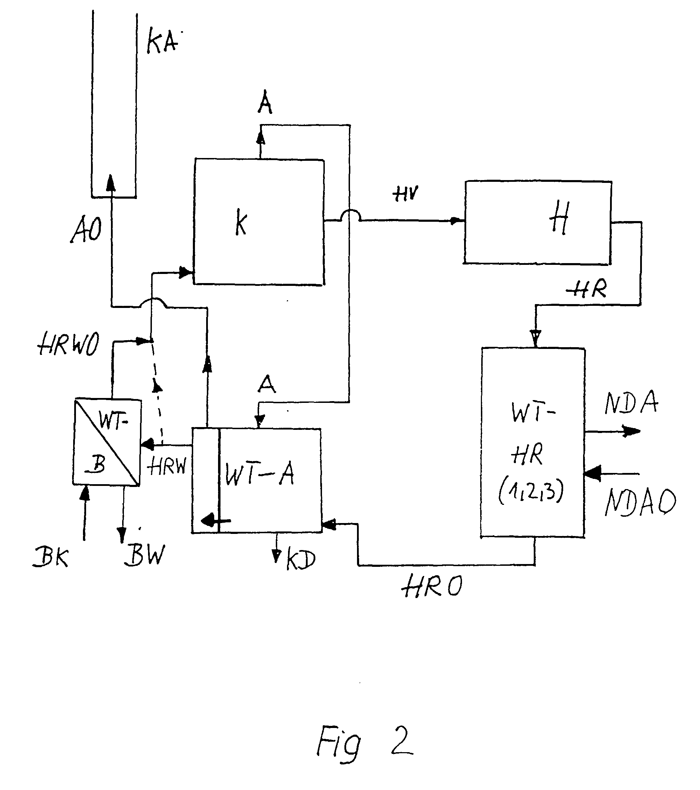

In der Figur 2 ist eine weitere Variante der Heizungsanlage und Wärmerückgewinnungsanlage gemäß Fig. 1 dargestellt, bei der in der Rückführleitung des wiedererwärmten Heizmediums HRW vom Abgaswärmetauscher WT-A zur Feuerungsanlage K ein Wärmetauscher für Brauchwasser WT-B eingebaut ist. Das auf über 70°C und mehr erwärmte sich im Heizungsrücklauf befindende Heizmedium HRW, das den Abgaswärmetauscher verläßt, ist geeignet, kaltes Brauchwasser BK auf eine ausreichend hohe Temperatur, die ausreicht, um die Legionellenbildung zu verhindern und das Abtöten von Legionellen zu bewirken, zu erwärmen, so daß heißes Brauchwasser BW im Wärmetauscher WT-B produziert werden kann. Dieses sehr heiße Brauchwasser BW kann dann noch in einer nachfolgenden Stufe auf eine geringere Temperatur gebracht werden, um Verbraucher mit geeignetem heißem Brauchwasser zu versorgen. Das in dem Wärmetauscher WT-B etwas abgekühlte rücklaufende Heizmedium HRWO wird dann der Feuerungsanlage K zugeführt. Es ist möglich, die Wärmetauschanlage für Brauchwasser WT-B periodisch an- und abzuschalten, je nach Bedarf.

Durch die Trennung der Abgaswärmerückgewinnung von der Wärmerückgewinnung des rücklaufenden Heizungsmediums ist es möglich, die einzelnen Wärmetauschanlagen, nämlich für den einstufigen Abgaswärmetauscher und die üblicherweise mehrstufige Wärmetauscheranlage für die Niedertemperaturabnehmer entsprechend den Gegebenheiten, nämlich Wärmebedarf und vorhandene Wärmeinhalte, auszulegen bzw. auch den Abgaswärmetauscher in bezug auf das durchlaufende dem heißen Abgas den Wärmeinhalt entziehende Wärme aufnehmende Medium gezielt auszulegen und zu steuern.

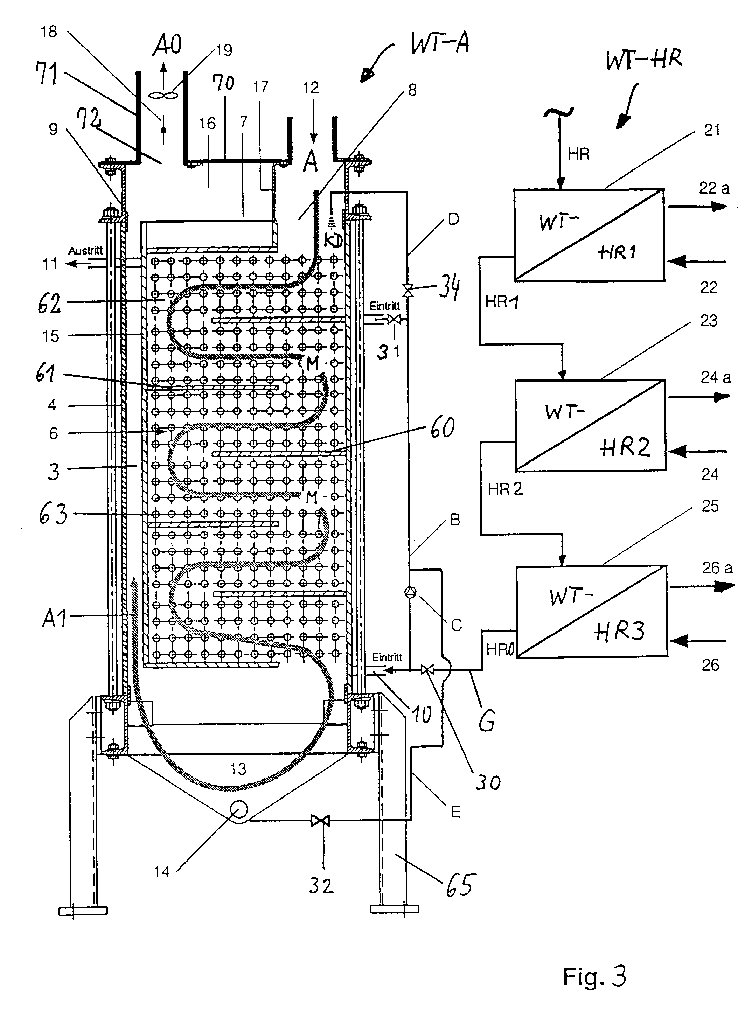

Ein wesentlicher Baustein der erfindungsgemäßen Anlage zur Wärmerückgewinnung ist das Wärmerückgewinnungsgerät für die heißen Abgase, nämlich der Wärmetauscher WT-A, wie er schematisiert im Querschnitt in der Figur 3 dargestellt ist. Der Abgaswärmetauscher WT-A ist als Rohrbündeltauscher 6 oder als Blockwärmetauscher aus imprägniertem Elektrographit hergestellt. Die Rohrbündel oder Blöcke bilden insgesamt einen Wärmetauscher, der nur an einen Kreis für Wärme aufnehmendes Medium, nämlich das von der Wärmetauschanlage für Niederdruckabnehmer über die Verbindungsleitung G ankommende abgekühlte rücklaufende Heizmedium HRO angeschlossen ist. Die Rohrbündel bzw. Blöcke 6 des Wärmetauschers werden von Wänden 15 seitlich begrenzt. Nach oben ist der Wärmetauscher 6 mit einem Deckel 7 verschlossen, wobei in diesem Deckel an der Abgaseintrittsseite für das in Pfeilrichtung 12 in der Abgasleitung von der Feuerungsanlage kommende heiße Abgas A ausgebildeten Eintrittsbereich 8. Die Gaskanäle 62 verlaufen durch den Abgaswärmetauscher von oben nach unten, die Kanäle 63 für das Wärme aufnehmende Heizmedium horizontal, mit Eintritt 10 unten am Abgaswärmetauscher und Austritt 11 oben am Wärmetauscher. Die Rohre 63 werden also von unten nach oben im Wärmetauscher 6 von dem rücklaufenden Heizmedium HRO durchströmt. Des weiteren ist der Wärmetauscher durch horizontale Trennwände 60, 61, die voneinander vertikal übereinander beabstandet und wechselseitig von der rechten bzw. linken Seite ausgehend bis über die Mitte in den Wärmetauscher hineinragen unterteilt, und zwar die Gaskanäle 62 unterteilt, so daß der Strömungsweg der heißen Abgase A vom Eintritt über den Bereich 8 von oben nach unten in Mäanderform durch die Gaskanäle um die Trennwände 60, 61 herumgeleitet ist. Der mäandrierende Weg M leitet die heißen Abgase über die Tauscherflächen entgegen der Fließrichtung des eintretenden Wärme aufnehmenden Heizmediums HRO. Die Abgase kühlen sich dabei solange aus, bis sie vor Eintritt in die unterhalb des Wärmetauschers 6 an die Gaskanäle anschließenden Wendekammer 13 sich fast auf das Temperaturniveau des eintretenden rücklaufenden Heizmediums HRO angleichen. Dieses hat eine Temperatur unterhalb des Wassertaupunktes der heißen Abgase, so daß das sich bildende Kondensat der heißen Abgase in die Wanne der Wendekammer 13 tropfen kann und das Kondensat über den Ablauf 14 abgezogen werden kann. Das soweit abgekühlte und vom Kondensat befreite Abgas A1 wird nun über den an einer Seitenwand des Wärmetauschers 6 ausgebildeten Abzugskanal 3 wieder nach oben in Richtung Kamin geleitet. Der Wärmetauscher 6 ist an einer Seite einseitig mit Abstand von der Verkleidung 4 umgeben, so daß zwischen der Verkleidung 4 und der Außenfläche der Wärmetauscher Rohrbündel bzw. Blöcke 6 ein Abzugskanal 3 gebildet ist für die abgekühlten Abgase A1. Die Verkleidung 4 besteht aus einem nichtkorrodierenden Material.

Der Abzugskanal 3 endet oberhalb des Deckels 7, der die Gaskanäle des Wärmetauschers abdeckt. Hier ist nun oberhalb des Deckels 7 ein Stauraum 16 durch zusätzliche Seitenwände 9 und 17 gebildet, der oberseitig durch eine weitere Abdeckung 70 verschlossen ist bis auf das zum Kamin führende Abgasrohr 71.

Der so gebildete Stauraum 16 grenzt im Bereich des Deckels 7 an den Wärmetauscher und damit an Wärme abgebende Außenflächen des Wärmetauschers sowie im Bereich 17 an die Trennwand zum Eintrittsbereich 8 der heißen Abgase A an, wobei ebenfalls ein Wärmeübergang in Richtung Stauraum stattfindet. Die über den Abzugskanal 3 in den Stauraum 16, der einen größeren Querschnitt als der Abzugskanal aufweist, gelangenden Abgase A1 erwärmen sich über die Kontaktflächen 17 und 7 soweit, daß sie die für den Abzug durch den Kamin erforderliche Temperatur mindestens aufweisen. Am Ausgang 72 aus dem Stauraum 16 zum Kamin in das Abgasrohr 71 ist die Jalousieklappe 18 angeordnet. Diese Jalousieklappe 18 wird über eine Differenztemperaturmessung über einen nicht dargestellten Antrieb betätigt. Die Differenztemperatur bildet sich aus dem Unterschied zwischen der in der Wendekammer 13 mittels eines Meßfühlers gemessenen Abgastemperatur und der am Kaminmund, d.h. bei Austritt der Abgase aus dem Kamin, mittels eines Meßfühlers gemessenen Temperatur. Wenn die Austrittstemperatur der Abgase aus dem Kamin die Temperatur der abgekühlten Abgase A1 in der Wendekammer unterschreitet, wird der Stellmotor für die Jalousieklappe 18 betätigt und die Jalousieklappe verschlossen, d.h. der Austrittsquerschnitt 72 verringert, so daß eine längere Verweilzeit der Abgase in dem Stauraum 16 mit der Folge einer höheren Nachwärmung erreicht wird. Damit ist eine Nachkondensation im Kamin und eine Kaminversottung ausgeschlossen. Nachfolgend der Jalousieklappe ist in dem Abgasrohr zum Kamin ein Ventilator 19 angeordnet, der zur Überwindung der geräteeigenen Widerstände vorgesehen ist und durch einen Druckwächter am Brennkessel der Feuerungsanlage gesteuert wird, was nicht näher dargestellt ist. Der Ventilator besitzt einen stufenlos geregelten Antrieb, so daß der Ventilator so betrieben werden kann, daß am Kamineintritt für das Abgas stets ein Unterdruck vorhanden ist.

Der Abgaswärmetauscher WT-A ist auf einem Gestell 65 aufgebaut, so daß genügend Raum für die Ableitung des Kondensats und Zugänglichkeit verbleibt.

Über die Leitung B, die von der Verbindungsleitung G zwischen der Wärmetauschanlage WT-HR für die Niederdruckabnehmer zum Abgaswärmetauscher WT-A führt, kann ein Teilstrom des eintretenden Wärme aufnehmenden, d.h. abgekühlten Heizmediums HRO, das sich im Rücklauf befindet, über eine Pumpe C in den oberen Teil des Wärmetauscher über den Eintritt mit Ventil 31 eingeführt werden, um in diesem Bereich sofort eine Kondensation der heißen Abgase zu erreichen. Das sich hier bildende Kondensat dient zur Abreinigung eventuell abgelagerter Schmutzpartikel auf dem Wärmetauscher 6. Auch in der Verbindungsleitung G ist ein Ventil 30 vor dem Eintritt 10 im unteren Bereich des Abgaswärmetauschers 6 vorgesehen. Werden die Ventile 30 und 31 verschlossen, dann kann über die Leitung B über die Verlängerung D und über die zusätzliche Leitung E aus der Kondensatwanne 13 Kondensat KD über die obere Wärmetauscherreihe, d.h. im Eintrittsbereich 8, der heißen Abgase gespritzt werden, um auf diese Weise eine Abreinigung des Wärmetauschers durchzuführen. Hierzu ist es erforderlich, die Ventile 32 und 34 in den Leitung E und D zu öffnen und nach der Abreinigung wieder zu schließen.

Für die Wärmerückgewinnung der Restwärme aus dem vom Wärmeverbraucher kommenden Heizungsmedium im Heizungsrücklauf HR ist ein von dem Abgaswärmetauscher WT-A getrennte Wärmetauschanlage WT-HR mit in dem Beispiel gemäß Fig. 3 drei Stufen vorgesehen. Der aus dem Heizsystem austretende Rücklauf HR des Heizmediums trifft in der ersten Stufen WT-HR1 der Wärmetauschanlage für Niederdruckabnehmer WT-HR auf ein als Gegenströmer 21 ausgebildetes Aggregat und kühlt sich auf das Niveau des in den Gegenströmer 21 über die Leitung 22 eintretenden Niedertemperaturmediums NDAO unter Berücksichtigung üblicher Verluste ab. Das eintretende Medium 22 erwärmt sich und wird über die Leitung 22a als erwärmtes Niedertemperaturmedium NDA dem Versorgungssystem wieder zugeführt. Das austretende bereits weiter abgekühlte Heizmedium HR1 wird nunmehr einer zweiten Stufe der Wärmetauschanlage, die ebenfalls als Gegenströmer 23 ausgebildet ist, zugeführt. Der Gegenströmer 23 wird über die Leitung 24 von einem noch kälteren Niedertemperaturmedium als in der Leitung 22 vorhanden beaufschlagt. Das rücklaufende Heizmedium HR1 kühlt sich unter üblichen Verlusten in dieser zweiten Stufe der Wärmetauschanlage WT-HR2 auf das Niveau des die Leitung 24 durchströmenden Mediums ab. Das in dem Gegenströmer 23 erwärmte Niedertemperaturmedium wird dann über die Leitung 24a wieder dem Versorgungssystem zugeführt. Das noch weiter abgekühlte rücklaufende Heizmedium HR2 wird nunmehr einer dritten Stufe der Wärmetauschanlage WT-HR zugeführt, nämlich dem ebenfalls als Gegenströmer 25 Aggregat WT-HR3, das über eine Leitung 26 mit einem kälteren Medium als in der Leitung 24 fließt beaufschlagt wird und das Medium des Heizungsrücklaufes kühlt sich unter üblichen Verlusten in dieser dritten Stufe WT-HR3 auf das Niveau des in der Leitung 26 zugeführten Niederdruckmediums ab und verläßt als abgekühltes Heizmedium HR0 die Wärmetauschanlage WT-HR, um über die Verbindungsleitung G dem Abgaswärmetauscher WT-A zugeführt zu werden. Das über die Leitung 26 der dritten Stufe WT-HR3 der Wärmetauschanlage zugeführte Medium wird in erwärmter Form über die Leitung 26a wieder einem Versorgungssystem zugeführt. Das auf diese in der Wärmetauschanlage so ausgekühlte Medium des Heizungsrücklaufes HR dient als kaltes Medium HR0, um im Abgaswärmetauscher 6 die heißen Abgase bis unter ihren Wassertaupunkt auszukühlen. Die Auskühlung des Heizungsrücklaufes HR kann auch in weniger oder in mehreren Stufen als in dem Ausführungsbeispiel nach Fig. 3 dargestellt herbeigeführt werden.

## Patentansprüche

1. Verfahren zur Rückgewinnung von Wärme aus den Abgasen (A) von Feuerungsanlagen (K) durch Abkühlen der heißen Abgase beim Durchleiten durch einen Abgaswärmetauscher (WT-A) bis unter den Wassertaupunkt der Abgase (A) und nachfolgendem Wiedererwärmen der Abgase (A) über ihren Wassertaupunkt für den Abzug durch einen Kamin (KA), bei dem Heizmedium in einer Feuerungsanlage (K) erwärmt und in einem Kreislauf über mindestens einen Wärmeverbraucher, wie Heizung, zum Entzug von Wärme geführt und das abgekühlte im Heizungsrücklauf befindliche Heizmedium dem mit den heißen Abgasen (A) beaufschlagten Abgaswarmetauscher (WT-A) zugeführt wird und unter Abkühlen der heißen Abgase (A) das Heizmedium sich erwärmt und zur Feuerungsanlage zurückgeführt wird und die bis unter den Wassertaupunkt abgekühlten Abgase (A) nach Abzug des Kondensats an den Außenflächen des Abgaswärmetauschers (WT-A) nach oben geführt werden und hierbei durch Kontakt mit den heißen Flächen des Abgaswärmetauschers (WT-A) sich auf eine für den Abzug durch den Kamin (KA) ausreichende Temperatur erwärmen, **dadurch gekennzeichnet**, daß die heißen Abgase in dem nur eine Stufe aufweisenden Abgaswärmetauscher (WT-A) mit einem einzigen Medium, dem sich im Heizungsrücklauf befindenden Heizmedium, bis unter ihren Wassertaupunkt abgekühlt werden und extern zum Abgaswärmetauscher (WT-A) das sich im Heizungsrücklauf befindende Heizmedium vor dem Eintritt in den Abgaswärmetauscher (WT-A) in einer ein- oder mehrstufigen Wärmetauschanlage (WT-HR) für einen oder mehrere Niedertemperaturabnehmer ausgekühlt wird, und die abgekühlten abgase durch den Abzugskanal in einen Stauraum (16) vor Eintritt in den Kamin (KA) geleitet werden, und durch Kontaktwärme in dem oberen Bereich des Abgaswärmetauschers (WT-A) aufgewärmt werden.

2. Verfahren nach Anspruch 1,
**dadurch gekennzeichnet**, daß das wiedererwärmte aus dem Abgaswärmetauscher (WT-A) kommende Heizmedium einem Wärmetauscher zur Brauchwassererhitzung (WT-B) auf eine zur Abtötung von Legionellen bzw. Verhinderung der Bildung von Legionellen ausreichenden Temperatur zugeführt wird und anschließend das sich auf einem kühleren Niveau befindliche Heizmedium zur Feuerungsanlage (K) zurückgeführt wird.

3. Verfahren nach Anspruch 1 oder 2,
**dadurch gekennzeichnet**, daß die Menge des den Abgaswärmetauscher durchströmenden abgekühlten Heizmediums steuerbar ist, dergestalt, daß der Wärmeinhalt der heißen von der Feuerungsanlage (K) kommenden Abgase (A) bis zur Abkühlung unterhalb des Wassertaupunktes der Abgase auf das Heizmedium übertragen wird.

4. Verfahren nach einem der Ansprüche 1 bis 3,
**dadurch gekennzeichnet,** daß das dem Abgaswärmetauscher (WT-A) zugeführte abgekühlte Heizmedium im Abgaswärmetauscher (WT-A) bis auf Temperaturen von 70 bis 80°C erwärmt wird.

5. Verfahren nach einem der Ansprüche 1 bis 4,
**dadurch gekennzeichnet**, daß die den Abgaswärmetauscher (WT-A) verlassenden abgekühlten Abgase in einem Abzugskanal (3) entlang der Außenflächen des Abgaswärmetauscher (WT-A) nach oben geleitet und in einem an die Außenflächen des Abgaswärmetauschers (WT-A) und den Eintrittsraum der heißen Abgase (A) in den Abgaswärmetauscher (WT-A) angrenzend ausgebildeten Stauraum (16) mit gegenüber dem Abzugskanal vergrößertem Querschnitt zum Wiedererwärmen geleitet werden und die Verweilzeit der Abgase in dem Stauraum (16) mittels einer den Ausgangsquerschnitt des Stauraumes (16) verändernden steuerbaren Jalousieklappe (18) geregelt wird.

6. Verfahren nach Anspruch 5,
**dadurch gekennzeichnet**, daß die Jalousieklappe (18) mittels eines in Abhängigkeit von der jeweils gemessenen Austrittstemperatur der Abgase aus dem Stauraum (16) in den Kamin (KA) betätigten Stellmotors verstellt wird.

7. Verfahren nach einem der Ansprüche 1 bis 6,
**dadurch gekennzeichnet,** daß ein Teilstrom des bis unter den Wassertaupunkt der heißen Abgase (A) abgekühlten Heizmediums dem Eingangsbereich des Abgaswärmetauschers (WT-A), d.h. mit den heißen Abgasen (A) nach deren Eintritt in den Abgaswärmetauscher (WT-A) zuerst beaufschlagten Wärmetauschflächen zugeführt wird, um eine massive Kondensation in diesem Bereich zu erreichen.

8. Verfahren nach einem der Ansprüche 1 bis 7,
**dadurch gekennzeichnet**, daß das Kondensat über eine Leitung (E,B,D) auf den Eingangsbereich des Abgaswärmetauschers (WT-A) und die oberen Wärmetauscherflächen geführt wird und periodisch durch Einspritzen von Kondensat dieser Bereich des Abgaswärmetauschers abgewaschen wird.

9. Anlage zur Rückgewinnung von Wärme aus den Abgasen von Feuerungsanlagen zum Durchführen des Verfahrens gemäß einem der Ansprüche 1 bis 8, enthaltend eine Feuerungsanlage (K), einen Abgaswärmetauscher (WT-A) für das Durchleiten von oben nach unten der von der Feuerungsanlage (K) kommenden heißen Abgase (A) unter Abkühlung derselben mit einem Abzugskanal (3) entlang der Außenflächen des Abgaswärmetauschers (WT-A) von unten nach oben für das Ableiten der abgekühlten Abgase (A) in den Kamin (KA) unter gleichzeitiger Erwärmung derselben durch Entlangstreichen an den Außenflächen des Abgaswärmetauschers und mit mindestens einem Wärmeverbraucher für das in der Feuerungsanlage (K) erwärmte und nach Durchlaufen der Wärmeverbraucher im Heizungsrücklauf zurückgeführte abgekühlte Heizmedium, **dadurch gekennzeichnet**, daß der Abgaswärmetauscher (WT-A) einstufig ausgebildet und nur an einen Kreis für Wärme aufnehmendes Medium, nämlich den sich im Heizungsrücklauf befindenden abgekühlten Heizmedium angeschlossen ist und eine ein- oder mehrstufige Wärmetauschanlage (WT-HR) für einen oder mehrere Niedertemperaturabnehmer für das sich im Heizungsrücklauf (HR) befindenden Heizmedium vorgesehen ist, wobei eine Verbindungsleitung zwischen der Wärmetauschanlage (WT-HR) für einen oder mehrere Niedertemperaturabnehmer und dem Abgaswärmetauscher (WT-A) vorgesehen ist, und der Abzugskanal (3) des Abgaswärmetauscher (WT-A) in einen am oberen Ende des Abgaswärmetauchers (WT-A) ausgebildeten Stauraum (16) mit gegenüber dem Abzugskanal (3) vergrößertem Querschnitt zur Beeinflussung der Verweilzeit der Abgase (A) zwecks Wiedererwärmung über eine im Ausgang zum Verlassen des Stauraumes (16) angeordnete mittels eines Stellmotors steuerbare Jalousieklappe (18) vor Kamineintritt übergeht.

10. Anlage nach Anspruch 9,
**dadurch gekennzeichnet**, daß der Stauraum (16) angrenzend an das obere Ende des Abgaswärmetauschers (WT-A) und einer Seite begrenzt von der Wandung des Eintrittsbereiches der heißen Abgase (A) in den Abgaswärmetauscher (WT-A) ausgebildet ist.

11. Anlage nach Anspruch 9 oder 10,
**dadurch gekennzeichnet,** daß die Gaskanäle für das heiße Abgas sich vertikal im Abgaswärmetauscher (WT-A) erstrecken und die das Heizmedium führenden Kanäle (63) waagerecht im Abgaswärmetauscher (WT-A) erstrecken, wobei mittels versetzt angeordneter sich waagerecht teilweise über die Breite des Abgaswärmetauschers (WT-A) erstreckender Trennwände (60,61) ein mäandrierender Weg der heißen Abgase durch den Abgaswärmetauscher von oben nach unten durchlaufend gebildet ist.

12. Anlage nach einem der Ansprüche 9 bis 11,
**dadurch gekennzeichnet,** daß der Abgaswärmetauscher (WT-A) aus imprägniertem Elektrographit hergestellt und der Abzugskanal für das Abgas an einer Seite des Wärmetauschers mittels nicht korrodierender Materialien ausgebildet ist.

13. Anlage nach einem der Ansprüche 9 bis 12,
**dadurch gekennzeichnet**, daß in der Rückführleitung für das Heizmedium zwischen Abgaswärmetauscher (WT-A) und Feuerungsanlage (K) ein Wärmetauscher (WT-B) zur Brauchwassererhitzung angeordnet ist, wobei das Heizmedium mit einer ausreichend hohen Temperatur zuführbar ist, um das Bilden von Legionellen im Brauchwasser zu verhindern bzw. Legionellen im Brauchwasser abzutöten.

14. Anlage nach Anspruch 9,
**dadurch gekennzeichnet**, daß Meßfühler zur Messung der Austrittstemperatur der Abgase (A) am Kaminende und im Bereich des Austrittes der abgekühlten Abgase (A) aus dem Wärmetauscher im Bereich des niedrigsten Temperaturniveaus der Abgase (A) angeordnet sind, die eine Differenztemperaturmessung ermöglichen, die das Regelsignal für den Stellmotor zum Betätigen der Jalousieklappe (18) liefern.

15. Anlage nach einem der Ansprüche 9 bis 14,
**dadurch gekennzeichnet**, daß ein Teilstrom des bis unter den Wassertaupunkt der Abgase (A) abgekühlten Heizmediums dem Eingangsbereich des Abgaswärmetauscher (WT-A) zuführbar ist.

16. Anlage nach einem der Ansprüche 9 bis 15,
**dadurch gekennzeichnet**, daß eine Leitung (E,B,D) von der das Kondensat unterhalb des Abgaswärmetauschers (WT-A) aufnehmenden Wanne auf die obere Seite des Eingangsbereiches des Abgaswärmetauschers (WT-A) geführt ist, die periodisch steuerbar ist, um Kondensat zum Abwaschen des Abgaswärmetauschers (WT-A) einzuspritzen.

17. Anlage nach einem der Ansprüche 9 bis 16,
**dadurch gekennzeichnet,** daß die Wärmetauschanlage (WT-HR) für Niedertemperaturabnahme mit als Gegenströmer ausgebildeten Wärmetauschstufen für die verschiedenen Niedertemperaturabnehmer ausgebildet ist.

18. Anlage nach einem der Ansprüche 9 bis 17,
**gekennzeichnet durch** einen Abgaswärmetauscher (WT-A) mit vertikal angeordneten Gaskanälen, die durch Unterteilung einen mäandrierenden Strömungsweg für die heißen Abgase (A) von oben nach unten bilden, einen sich oberhalb des Abgaswärmetauschers an die Gaskanäle anschließenden Eintrittsraum mit Verteilungsfunktion mit Zuleitung für die heißen Abgase (A) und einem sich unterhalb des Abgaswärmetauschers (WT-A) an die Gaskanäle anschließenden Wenderaum mit Sammelwanne für das Kondensat und einer umlaufenden Verkleidung für den Abgaswärmetauscher (WT-A) aus nichtkorrodierendem Material, die auf einer Seite des Abgaswärmetauschers (WT-A) einen Abzugskanal (3) nach oben mit Kaminanschluß für das abgekühlte Abgas bildet und in einen oberhalb des Abgaswärmetauschers (WT-A) ausgebildeten Stauraum (16) mündet, dessen Ausgangsquerschnitt mit der Jalousieklappe (18) regelbar ist.

## Claims

1. Method for the recovery of heat from the combustion gases (A) of furnaces (K), by cooling the hot combustion gases as they are passed through a combustion gas heat exchanger (WT-A) to below the dew point of the combustion gases (A), and subsequently reheating the combustion gases (A) above their dew point for discharge through a flue (KA), in which method a heating medium is heated in a furnace (K) and is routed in a circuit via at least one heat consumer, such as heating, for the extraction of heat, and the cooled heating medium in the heating return is supplied to the combustion gas heat exchanger (WT-A) to which the hot combustion gases (A) are admitted, and, whilst cooling the hot combustion gases (A), the heating medium heats up and is returned to the furnace, and the combustion gases (A), which have been cooled to below the dew point, are led upwards after the discharge of condensate at the outside surfaces of the combustion gas heat exchanger (WT-A), and thereby are heated to a temperature which is sufficient for discharge through the flue (KA) by means of contact with the hot surfaces of the combustion gas heat exchanger (WT-A),
**characterised in that** the hot combustion gases are cooled to below their dew point in the combustion gas heat exchanger (WT-A), which has only one stage, with a single medium, the heating medium in the heating return, and the heating medium in the heating return is cooled down outside the combustion gas heat exchanger (WT-A) before the entry into the combustion gas heat exchanger (WT-A) in single-stage or multi-stage heat exchanger installations (WT-HR) for one or more low-temperature consumers, and the cooled combustion gases are routed through the discharge pipe into an accumulation space (16) before the entry into the flue (KA) and are heated up by means of contact heat in the upper region of the combustion gas heat exchanger (WT-A).

2. Method according to claim 1, characterised in that the reheated heating medium coming from the combustion gas heat exchanger (WT-A) is supplied to a heat exchanger (WT-B) for heating process water to a temperature which is sufficient for killing off legionellae or preventing the formation of legionellae, and the heating medium, which is at a cooler level, is subsequently returned to the furnace (K).

3. Method according to claim 1 or 2, characterised in that the amount of cooled heating medium flowing through the combustion gas heat exchanger can be controlled in such a way that the heat capacity of the hot combustion gases (A) coming from the furnace (K) is transferred to the heating medium until the combustion gases have been cooled to below the dew point.

4. Method according to one of the claims 1 to 3, characterised in that the cooled heating medium supplied to the combustion gas heat exchanger (WT-A) is heated in the combustion gas heat exchanger (WT-A) to temperatures of 70°C to 80°C.

5. Method according to one of the claims 1 to 4, characterised in that the cooled combustion gases leaving the combustion gas heat exchanger (WT-A) are routed upwards in a discharge pipe (3) along the outside surfaces of the combustion gas heat exchanger (WT-A), and are routed for reheating in an accumulation space (16), which is constructed so as to be adjacent to the outside surfaces of the combustion gas heat exchanger (WT-A) and the entrance space of the hot combustion gases (A) into the combustion gas heat exchanger (WT-A) and has a cross-section which is enlarged with respect to the discharge pipe, and the dwell time of the combustion gases in the accumulation space (16) is regulated by means of a controllable shutter valve (18) which alters the outlet cross-section of the accumulation space (16).

6. Method according to claim 5, characterised in that the shutter valve (18) is adjusted by means of a servomotor, which is operated as a function of the outlet temperature of the combustion gases exiting from the accumulation space (16) into the flue (KA) that is measured in each case.

7. Method according to one of the claims 1 to 6, characterised in that a partial flow of the heating medium, which has been cooled to below the dew point of the hot combustion gases (A), is supplied to the inlet region of the combustion gas heat exchanger (WT-A), i.e. to heat exchanging surfaces to which the hot combustion gases (A) are first admitted after their entry into the combustion gas heat exchanger (WT-A), in order to achieve a strong condensation in this region.

8. Method according to one of the claims 1 to 7, characterised in that the condensate is led via a conduit (E, B, D) to the inlet region of the combustion gas heat exchanger (WT-A) and the upper heat exchanging surfaces, and this region of the combustion gas heat exchanger is periodically rinsed by injection of condensate.

9. Installation for the recovery of heat from the combustion gases of furnaces for carrying out the method in accordance with one of the claims 1 to 8, containing a furnace (K), a combustion gas heat exchanger (WT-A) for the hot combustion gases (A) coming from the furnace (K) to pass through from top to bottom and be cooled, and having a discharge pipe (3) along the outside surfaces of the combustion gas heat exchanger (WT-A) from bottom to top for drawing off the cooled combustion gases (A) into the flue (KA) whilst said combustion gases are simultaneously heated by means of brushing along the outside surfaces of the combustion gas heat exchanger, and having at least one heat consumer for the cooled heating medium, which is heated in the furnace (K) and is returned in the heating return after passing through the heat consumer, **characterised in that** the combustion gas heat exchanger (WT-A) is constructed so as to be single-stage and is connected only to one circuit for a heat-absorbing medium, namely the cooled heating medium in the heating return, and a single-stage or multi-stage heat exchanger installation (WT-HR) for one or more low-temperature consumers is provided for the heating medium in the heating return (HR), with a connecting conduit being provided between the heat exchanger installation (WT-HR) for one or more low-temperature consumers and the combustion gas heat exchanger (WT-A), and in front of the entrance to the flue, the discharge pipe (3) of the combustion gas heat exchanger (WT-A) merges into an accumulation space (16), which is constructed at the upper end of the combustion gas heat exchanger (WT-A) and has a cross-section which is enlarged with respect to the discharge pipe (3), for influencing the dwell time of the combustion gases (A) for the purpose of reheating by way of a shutter valve (18), which is arranged in the outlet for leaving the accumulation space (16) and can be controlled by means of a servomotor.

10. Installation according to claim 9, characterised in that the accumulation space (16) is constructed so as to be adjacent to the upper end of the combustion gas heat exchanger (WT-A) and have one side delimited by the wall of the entry region of the hot combustion gases (A) into the combustion gas heat exchanger (WT-A).

11. Installation according to claim 9 or 10, characterised in that the gas ducts for the hot combustion gas extend vertically in the combustion gas heat exchanger (WT-A), and the ducts (63) carrying the heating medium extend horizontally in the combustion gas heat exchanger (WT-A), with a meandering path of the hot combustion gases running through the combustion gas heat exchanger from top to bottom being formed by means of dividing walls (60, 61) which are arranged so as to be staggered and extend horizontally partially over the width of the combustion gas heat exchanger (WT-A).

12. Installation according to one of the claims 9 to 11, characterised in that the combustion gas heat exchanger (WT-A) is manufactured from impregnated electrographite, and the discharge pipe for the combustion gas on one side of the heat exchanger is constructed of non-corroding materials.

13. Installation according to one of the claims 9 to 12, characterised in that a heat exchanger (WT-B) for process-water heating is arranged in the return conduit for the heating medium between combustion gas heat exchanger (WT-A) and furnace (K), whereby the heating medium can be supplied at a temperature which is sufficiently high to prevent the formation of legionellae in the process water or to kill off legionellae in the process water.

14. Installation according to claim 9, characterised in that sensors for measuring the outlet temperature of the combustion gases (A) at the end of the flue and in the region of the outlet of the cooled combustion gases (A) from the heat exchanger are arranged in the region of the lowest temperature level of the combustion gases (A) and permit a differential temperature measurement and deliver the control signal for the servomotor for operating the shutter valve (18).

15. Installation according to one of the claims 9 to 14, characterised in that a partial current of the heating medium, which has been cooled to below the dew point of the combustion gases (A), can be supplied to the inlet region of the combustion gas heat exchanger (WT-A).

16. Installation according to one of the claims 9 to 15, characterised in that a conduit (E, B, D) is led from the trough, which receives the condensate underneath the combustion gas heat exchanger (WT-A), to the upper side of the inlet region of the combustion gas heat exchanger (WT-A), which conduit is periodically controllable in order to inject condensate for rinsing the combustion gas heat exchanger (WT-A).

17. Installation according to one of the claims 9 to 16, characterised in that the heat exchanger installation (WT-HR) for low-temperature consumption is constructed with heat exchanger stages for the various low-temperature consumers that are constructed as counter-current devices.

18. Installation according to one of the claims 9 to 17, characterised by a combustion gas heat exchanger (WT-A) having vertically-arranged gas ducts, which, by means of subdivision, form a meandering flow path for the hot combustion gases from top to bottom, an entrance space, which is connected to the gas ducts above the combustion gas heat exchanger and has a distribution function with feed line for the hot combustion gases (A), and a reversing space which is connected to the gas ducts underneath the combustion gas heat exchanger (WT-A) and has a collecting trough for the condensate and a circumferential covering for the combustion gas heat exchanger (WT-A) that is made of a non-corroding material and forms a discharge pipe (3) on one side of the combustion gas heat exchanger (WT-A) which leads upwards and has a flue connection for the cooled combustion gas and opens out into an accumulation space (16), which is constructed above the combustion gas heat exchanger (WT-A) and the outlet cross-section of which can be regulated with the shutter valve (18).

## Revendications

1. Procédé pour la récupération de chaleur des gaz de combustion (A) émanant d'un foyer (K), par refroidissement des gaz de combustion chauds lors de leur traversée d'un échangeur de chaleur de gaz de combustion (WT-A), jusque sous le point de rosée des gaz de combustion (A), suivi d'un réchauffement des gaz de combustion (A) au-dessus de leur point de rosée, pour leur évacuation par une cheminée (KA), procédé selon lequel du fluide caloporteur est chauffé dans un foyer (K) et est conduit en boucle, en passant par au moins un consommateur de chaleur, tel que chauffage, pour l'extraction de chaleur, et selon lequel le fluide caloporteur refroidi se trouvant dans le retour du chauffage est acheminé sur l'échangeur de chaleur de gaz de combustion (WT-A) alimenté en gaz de combustion chauds, et par refroidissement des gaz de combustion (A) chauds, le fluide caloporteur se réchauffe et est renvoyé au foyer, et les gaz de combustion (A) refroidis jusque sous le point de rosée sont dirigés vers le haut, après extraction du condensat, sur les faces extérieures de l'échangeur de chaleur de gaz de combustion (WT-A) et se réchauffent alors, par contact avec les faces chaudes de l'échangeur de chaleur de gaz de combustion (WT-A), jusqu'à une température suffisante pour l'évacuation par la cheminée (KA), caractérisé en ce que les gaz de combustion chauds sont refroidis dans l'échangeur de chaleur de gaz de combustion (WT-A) ne présentant qu'un seul étage, avec un seul fluide, à savoir le fluide caloporteur se trouvant dans le retour du chauffage, jusque sous leur point de rosée, et à l'extérieur par rapport à l'échangeur de chaleur de gaz de combustion (WT-A), le fluide caloporteur se trouvant dans le retour du chauffage est refroidi, avant l'entrée dans l'échangeur de chaleur de gaz de combustion (WT-A), dans une installation d'échange de chaleur (WT-HR) à un ou plusieurs étages pour un ou plusieurs consommateurs basse température, et les gaz de combustion refroidis sont conduits, par le conduit d'évacuation, dans une chambre d'accumulation (16), avant d'entrer dans la cheminée (KA), et réchauffés par la chaleur de contact dans la zone supérieure de l'échangeur de chaleur de gaz de combustion (WT-A).

2. Procédé selon la revendication 1, caractérisé en ce que le fluide caloporteur réchauffé en provenance de l'échangeur de chaleur de gaz de combustion (WT-A) est amené à un échangeur de chaleur (WT-B) destiné au réchauffement d'eau non potable, à une température suffisante pour tuer des bactéries legionellae ou empêcher la formation de bactéries legionellae, et en ce qu'ensuite, le fluide caloporteur se trouvant à un niveau plus frais est réacheminé au foyer (K).

3. Procédé selon la revendication 1 ou 2, caractérisé en ce que le débit du fluide caloporteur refroidi traversant l'échangeur de chaleur de gaz de combustion est réglable, de telle sorte que la teneur en chaleur des gaz de combustion chauds (A) émanant du foyer (K) est transmise au fluide caloporteur jusqu'à refroidissement des gaz de combustion sous le point de rosée.

4. Procédé selon l'une des revendications 1 à 3, caractérisé en ce que le fluide caloporteur refroidi amené à l'échangeur de chaleur de gaz de combustion (WT-A) est réchauffé dans l'échangeur de chaleur de gaz de combustion (WT-A) jusqu'à des températures de 70 à 80 °C.

5. Procédé selon l'une des revendications 1 à 4, caractérisé en ce que les gaz de combustion refroidis quittant l'échangeur de chaleur de gaz de combustion (WT-A) sont dirigés vers le haut dans un conduit d'évacuation (3) longeant les faces extérieures de l'échangeur de chaleur de gaz de combustion (WT-A), et sont conduits à des fins de réchauffement dans une chambre d'accumulation (16) de section transversale élargie par rapport au conduit d'évacuation, et prévue au niveau des faces extérieures de l'échangeur de chaleur de gaz de combustion (WT-A) et au voisinage de la chambre d'admission des gaz de combustion chauds (A) dans l'échangeur de chaleur de gaz de combustion (WT-A), et en ce que le temps de séjour des gaz de combustion dans la chambre d'accumulation (16) est réglé au moyen d'un clapet à jalousie (18) actionnable modifiant la section transversale de sortie de la chambre d'accumulation (16).

6. Procédé selon la revendication 5, caractérisé en ce que le clapet à jalousie (18) est ajusté par un moteur de positionnement commandé en fonction de la température de sortie mesurée à un certain moment des gaz de combustion chauds sortant de la chambre d'accumulation (16) vers la cheminée (KA).

7. Procédé selon l'une des revendications 1 à 6, caractérisé en ce qu'un filet du fluide caloporteur refroidi jusque sous le point de rosée des gaz de combustion chauds (A) est amené dans la zone d'entrée de l'échangeur de chaleur de gaz de combustion (WT-A), c'est-à-dire des faces d'échange de chaleur contactées en premier par les gaz de combustion chauds (A) après leur entrée dans l'échangeur de chaleur de gaz de combustion (WT-A), pour assurer une condensation massive dans cette zone.

8. Procédé selon l'une des revendications 1 à 7, caractérisé en ce que le condensat est conduit par une conduite (E, B, D) sur la zone d'entrée de l'échangeur de chaleur de gaz de combustion (WT-A) et sur les faces d'échange de chaleur supérieures, et en ce que cette zone de l'échangeur de chaleur de gaz de combustion est périodiquement lavée par injection de condensat.

9. Installation pour la récupération de chaleur des gaz de combustion d'un foyer, pour l'exécution du procédé selon l'une des revendications 1 à 8, comprenant un foyer (K), un échangeur de chaleur de gaz de combustion (WT-A) pour le transfert, de haut en bas, en les refroidissant, des gaz de combustion chauds (A) émanant du foyer (K), avec un conduit d'évacuation (3) longeant les faces extérieures de l'échangeur de chaleur de gaz de combustion (WT-A), de bas en haut, pour conduire les gaz de combustion refroidis (A) dans la cheminée (KA), en les réchauffant simultanément par léchage des faces extérieures de l'échangeur de chaleur de gaz de combustion, et avec au moins un consommateur de chaleur pour le fluide caloporteur chauffé dans le foyer (K) et réinjecté refroidi dans le retour du chauffage, après passage dans le consommateur de chaleur, caractérisée en ce que l'échangeur de chaleur de gaz de combustion (WT-A) est mono-étagé et n'est raccordé qu'à un circuit pour un fluide absorbant de la chaleur, à savoir le fluide caloporteur refroidi présent dans le retour du chauffage, et en ce qu'on prévoit une installation d'échange de chaleur (WT-HR) mono- ou pluri-étagée, destinée à un ou plusieurs consommateurs basse température, pour le fluide caloporteur se trouvant dans le retour de chauffage (HR), une conduite de connexion étant prévue entre l'installation d'échange de chaleur (WT-HR) destinée à un ou plusieurs consommateurs basse température et l'échangeur de chaleur de gaz de combustion (WT-A), et le conduit d'évacuation (3) de l'échangeur de chaleur de gaz de combustion (WT-A) se transformant en une chambre d'accumulation (16) prévue à l'extrémité supérieure de l'échangeur de chaleur de gaz de combustion (WT-A) et ayant une section transversale élargie par rapport au conduit d'évacuation (3) pour influencer le temps de séjour des gaz de combustion (A) en vue de les réchauffer, par l'intermédiaire d'un clapet à jalousie (18) monté à la sortie de la chambre d'accumulation (16) et actionnable par un moteur de positionnement, avant l'entrée de la cheminée.

10. Installation selon la revendication 9, caractérisée en ce que la chambre d'accumulation (16) est prévue au voisinage de l'extrémité supérieure de l'échangeur de chaleur de gaz de combustion (WT-A) et d'une face délimitée par la paroi de la zone d'admission des gaz de combustion chauds (A) dans l'échangeur de chaleur de gaz de combustion (WT-A).

11. Installation selon la revendication 9 ou 10, caractérisée en ce que les passages de gaz destinés au gaz de combustion chaud s'étendent verticalement dans l'échangeur de chaleur de gaz de combustion (WT-A) et en ce que les conduits (63) transportant le fluide caloporteur s'étendent à l'horizontale dans l'échangeur de chaleur de gaz de combustion (WT-A), un itinéraire sinueux des gaz de combustion chauds traversant l'échangeur de chaleur de gaz de combustion de bas en haut étant créé, sans discontinuité, grâce à des parois de séparation (60, 61) agencées en alternance et s'étendant à l'horizontale en partie sur la largeur de l'échangeur de chaleur de gaz de combustion (WT-A).

12. Installation selon l'une des revendications 9 à 11, caractérisée en ce que l'échangeur de chaleur de gaz de combustion (WT-A) est fabriqué en électrographite imprégné, et le conduit d'évacuation destiné aux gaz de combustion d'un côté de l'échangeur de chaleur est réalisé en matériaux inoxydables.

13. Installation selon l'une des revendications 9 à 12, caractérisée en ce qu'un échangeur de chaleur (WT-B) pour le réchauffement d'eau non potable est prévu dans la conduite de retour pour le fluide caloporteur, entre l'échangeur de chaleur de gaz de combustion (WT-A) et le foyer (K), le fluide caloporteur pouvant être apporté à une température suffisamment élevée pour empêcher la formation de bactéries legionellae dans l'eau non potable ou pour tuer des bactéries legionellae présentes dans l'eau non potable.

14. Installation selon la revendication 9, caractérisée en ce que des capteurs servant à mesurer la température de sortie des gaz de combustion (A) au bout de la cheminée et dans la zone de la sortie des gaz de combustion (A) refroidis de l'échangeur de chaleur sont placés dans la zone du plus bas niveau de température des gaz de combustion (A), lesquels capteurs permettent une mesure de température différentielle qui fournit le signal de réglage destiné au moteur de positionnement, afin qu'il actionne le clapet à jalousie (18).

15. Installation selon l'une des revendications 9 à 14, caractérisée en ce qu'un filet du fluide caloporteur refroidi jusque sous le point de rosée des gaz de combustion (A) peut être acheminé dans la zone d'admission de l'échangeur de chaleur de gaz de combustion (WT-A).

16. Installation selon l'une des revendications 9 à 15, caractérisée en ce qu'une conduite (E, B, D) est dirigée de la cuve recueillant le condensat sous l'échangeur de chaleur de gaz de combustion (WT-A) vers la face supérieure de la zone d'admission de l'échangeur de chaleur de gaz de combustion (WT-A), et peut être commandée périodiquement, pour injecter du condensat afin de laver l'échangeur de chaleur de gaz de combustion (WT-A).

17. Installation selon l'une des revendications 9 à 16, caractérisée en ce que l'installation d'échange de chaleur (WT-HR) pour la consommation basse température est équipée d'étages d'échange de chaleur matérialisés par des dispositifs à contre-courant, pour les différents consommateurs basse température.

18. Installation selon l'une des revendications 9 à 17, caractérisée par un échangeur de chaleur de gaz de combustion (WT-A) comprenant des passages de gaz verticaux qui, par compartimentation, forment, de haut en bas, un itinéraire d'écoulement sinueux pour les gaz de combustion chauds (A), une chambre d'admission qui fait suite aux passages de gaz, au dessus de l'échangeur de chaleur de gaz de combustion, et assume une fonction de distribution avec conduite d'amenée pour les gaz de combustion chauds (A), et une chambre d'inversion qui fait suite aux passages de gaz, en dessous de l'échangeur de chaleur de gaz de combustion (WT-A), avec cuve collectrice pour le condensat et un habillage périphérique en matériau inoxydable pour l'échangeur de chaleur de gaz de combustion (WT-A), qui forme, d'un côté de l'échangeur de chaleur de gaz de combustion (WT-A), un conduit d'évacuation (3) vers le haut, avec raccord à la cheminée, pour le gaz de combustion refroidi, et débouche dans une chambre d'accumulation (16) prévue au-dessus de l'échangeur de chaleur de gaz de combustion (WT-A) et dont la section transversale de sortie peut être réglée avec le clapet à jalousie (18).
